# FASCICULE DE BREVET EUROPEEN

(11) **EP 0 489 630 B1**
(45) Date de publication et mention de la délivrance du brevet: **12.04.1995**
(21) Numéro de dépôt: 91403240.4
(22) Date de dépôt: 29.11.1991
(51) Int. Cl.: B60S 1/04

(54) **Platine d'essuie-glace à bocal de lave-glace intégré**
Scheibenwischer-Gestellplatte mit integriertem Scheibenwascherbehälter
Windscreen wiper support with integrated windscreen washer fluid container

(30) Priorité: 03.12.1990 FR 9015118
(43) Date de publication de la demande: 10.06.1992
(73) Titulaire: VALEO SYSTEMES D'ESSUYAGE, 78180 Montigny-Le-Bretonneux (FR)
(72) Inventeur: Eustache, Jean-Pierre, F-92160 Antony (FR); Berge, Gilles, F-78120 Clairefontaine-en-Yvelines (FR)
(74) Mandataire: Gamonal, Didier

(56) Documents cités:
- EP-A- 0 354 646
- FR-A- 2 613 303

## Description

La présente invention a pour objet une platine d'essuie-glace à bocal de lave-glace intégré.

Il est connu de monter sur une platine d'essuieglace, la partie d'entraînement d'au moins un balai d'essuie-glace, constituée généralement d'un moto-réducteur d'essuyage entraînant, soit directement, soit par l'intermédiare de tringles de transmission d'effort, au moins un balai, le récipient destiné à recevoir le liquide de lave-glace et la pompe permettant de diriger ce liquide vers un gicleur.

Les véhicules actuels comprennent tous un dispositif d'essuie-glace auquel est adjoint un dispositif de lave-glace utilisé lorsque des projections diverses opacifient sur la surface à essuyer telle qu'un pare-brise de véhicule automobile.

Mais, ces ensembles sont montés séparément ce qui conduit à utiliser des canalisations multiples et accroît les coûts de montage puisque l'assemblage est réalisé en plusieurs opérations.

En effet, en raison de l'espace restreint disponible sous le capot, il n'est pas rare que le bocal de lave-glace soit éloigné de la platine d'essuie-glace ou de la pompe de lave-glace.

Or il est souhaitable que tous les éléments intervenant dans la construction d'une voiture puissent être montés par des robots industriels et, à cet effet, il faut que les opérations de montage soient simplifiées au maximum.

Il a déjà été proposé dans FR-A-2 624 821 une platine d'essuie-glace constituée par un corps creux, en matière plastique, auquel est intégrée une cavité étanche formant bocal de lave-glace, ce bocal étant réalisé par extrusion par soufflage.

Ce dispositif présente néanmoins l'inconvénient de ne pas pouvoir donner la forme souhaitée à ce bocal et d'autre part ne permet pas d'obtenir une rigidification satisfaisante de l'ensemble ainsi formé.

La présente invention se propose donc de rémédier à l'inconvénient mentionné ci-dessus en proposant une platine d'essuie-glace à bocal intégré dont les formes de ce bocal peuvent être diverses tout en ayant un ensemble rigide monobloc en fin d'élaboration.

Selon la présente invention, une platine d'essuie-glace constituée d'un ensemble monobloc muni d'une cavité formant bocal de lave-glace intégré à la platine et comprenant des moyens de fixation sur la carrosserie, notamment d'un véhicule automobile, des moyens de montage d'un moto-réducteur d'essuyage, au moins un palier de sortie pour les arbres d'entraînement d'au moins un balai d'essuie-glace, lesdits arbres étant destinés à être reliés mécaniquement audit moto-réducteur, est caractérisée en ce que la cavité présente une surface ouverte ayant permis le démoulage de la platine hors de la matrice ayant servi à son moulage, cette surface ouverte étant apte à être fermée par un couvercle pour constituer ledit bocal de lave-glace.

Grâce à l'invention, le bocal présente une surface ouverte ce qui permet lors de l'élaboration par moulage d'obtenir toutes les formes volumiques désirées.

Selon une forme de réalisation de l'invention, le couvercle est soudé sur la partie de la surface de la platine.

Grâce à cette forme de réalisation, l'ensemble obtenu est ainsi un ensemble rigide et monobloc après soudage du couvercle.

Selon une autre forme de réalisation, la platine et le couvercle sont réalisés en des matériaux différents.

Les autres caractéristiques et avantages de l'invention vont ressortir maintenant de la description qui va suivre en se référant aux dessins annexés sur lesquels :
- la figure 1 est une vue en perspective d'une platine à bocal intégré selon l'invention ;
- la figure 2 est une vue frontale d'une platine à bocal intégré selon l'invention.

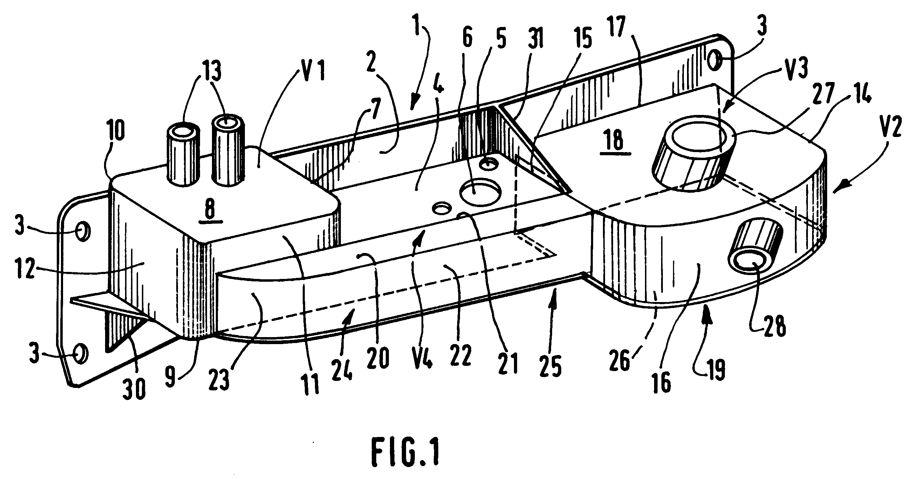

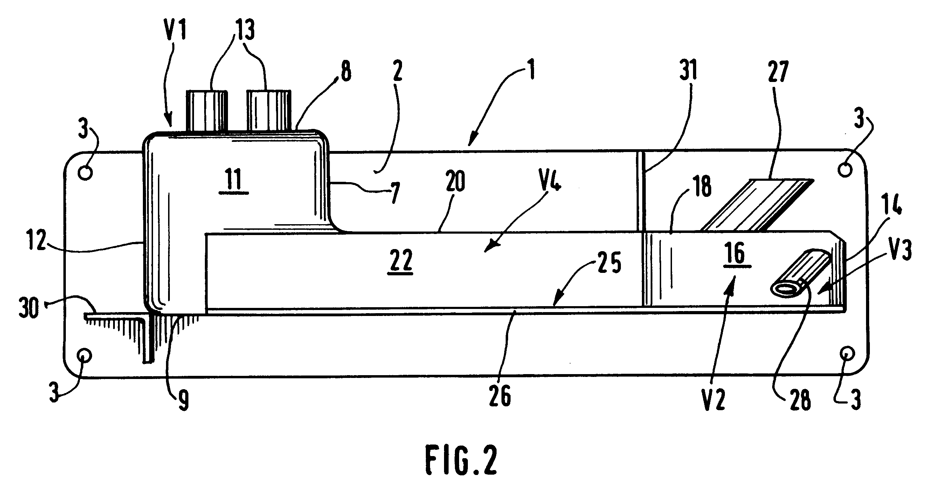

Sur les figures 1 et 2 on distingue la platine désignée du manière générale par la référence 1.

Cette platine présente une paroi 2 de forme générale rectangulaire comportant dans ses extrémités angulaires des trous de fixation 3 de la platine dans son ensemble sur la carrosserie du véhicule automobile.

A partir de cette première paroi s'érige sensiblement orthogonalement une plateforme 4 comportant des trous de fixation 5 du moto-réducteur d'essuyage non représenté et d'un alésage de passage 6 de l'arbre de sortie du moto-réducteur.

A partir de cette plateforme et orthogonalement à celle-ci ainsi qu'à la première paroi 2 et à distance de l'alésage de passage 6 du moto-réducteur s'érige un volume creux V1 de forme générale parallélépipédique à face ouverte 7 dirigée vers l'alésage de passage 6 et présentant deux parois 8, 9 parallèles entre elles et sensiblement parallèles à la plateforme 4 en étant disposées de part et d'autre du plan passant par cette plateforme, deux parois sensiblement parallèles 10, 11 et orthogonales aux parois 8, 9, la paroi 10 étant sensiblement confondue avec la première paroi 2 de la platine 1 et une paroi 12 orthogonale aux parois 10, 8,9,11 en étant disposées en vis-à-vis de l'ouverture 7 que présente ce volume V1.

A partir de la paroi 8 du volume V1 s'érigent des paliers 13 orthogonaux à ladite paroi et aptes à recevoir les arbres d'entraînement d'un dispositif de liaison mécanique entre ceux-ci et l'arbre d'entraînement d'un moto-réducteur d'essuyage traversant l'alésage de passage 6.

Ainsi, une partie de la liaison mécanique entre le moto-réducteur et les arbres d'entraînement traversant les alésages 13 sont logés dans le volume V1 en les protégeant ainsi d'éventuelles pollutions.

A l'opposé du volume V1 et au-delà de la plateforme 4 est prévu un deuxième volume V2, intitulé dans la suite de la description bocal de lave-glace se présentant sous la forme d'un premier volume creux parallélépipédique V3 se prolongeant par un deuxième volume parallélépipédique V4, les deux volumes V3 et V4 présentant une face ouverte située dans le même plan.

Le volume V3 présente deux parois 14, 15 sensiblement parallèles entre elles et orthogonales à la paroi 2 de la platine 1, deux parois 16, 17 également sensiblement parallèles entre elles, la paroi 17 étant confondue avec la paroi 2 de la platine 1, une paroi 18 perpendiculaire aux parois 14, 15, 16, 17 et située en vis-à-vis de l'ouverture 19 du volume parallélépipédique V3.

Le volume V4 suivant le volume V3 en communiquant avec celui-ci présente une paroi 20 coplanaire avec la paroi 18 du volume V3, une paroi 21 perpendiculaire à la paroi 15 et sensiblement parallèle à la paroi 2 de la platine 1 en venant aboutir sur la paroi 11 du volume V1, une paroi 22 poursuivant la paroi 16 du volume V3 en étant en retrait par rapport à celle-ci et venant se terminer sur la paroi 11 du volume V1 en formant une partie incurvée 23. Ce volume ainsi défini présentant une face ouverte 24, qui comme précédemment citée, est coplanaire avec l'ouverture 19 du volume 23.

Ainsi le bocal de lave-glace référencé V2 présente donc une face ouverte 25 constituée par les deux faces ouvertes 24 et 19 et ses parois sont constituées par une partie des parois 11,21,14,15,16,17,18,20,22 de la platine 1.

Cette face ouverte 25 est apte à être fermée par un couvercle 26 qui présente donc une forme sensiblement semblable à la paroi 18 et à la paroi 20 en venant recouvrir ainsi l'ouverture 25 en étant fixée par tous les moyens appropriés sur les bords des parois 14, 15, 16, 17, 20, 21, 22, tels que par soudage. Le bocal V2 obtenu s'étend sur la majeure partie longitudinale de la platine 1.

Comme visible sur les figures le volume V3 présente une tubulure de remplissage 27 prévue à partir de la paroi 18 et un embout 28 prévu à partir de la paroi 16 et apte à être relié par des conduites à un gicleur par l'intermédiaire d'une pompe de lave-glace (non représentée), cette pompe de lave-glace pouvant elle-même être montée sur la platine ainsi formée.

De préférence, cette platine 1 présente des nervures de raidissement 30, 31, les nervures 30 étant disposées au voisinage de la paroi 12 du volume V1 et la nervure 31 étant disposée orthogonalement à la plateforme 4 afin de rigidifier celle-ci.

Ainsi, il est obtenu une platine d'essuie-glace à bocal intégré présentant un volume creux apte à être fermé par un couvercle 26.

Lors de l'élaboration de cette platine, il est fabriqué dans un premier temps d'une manière monobloc telle que par moulage, la paroi 1, le volume V1, le volume V2, la plateforme 4, les nervures de raidissement 30, 31, les paliers 13, la tubulure 27 et l'embout 28 et dans une deuxième processus il est fabriqué le couvercle 26 qui est apte à être rapporté sur l'ouverture du volume V2.

Grâce à cette disposition il est facilement compréhensible que le volume V2 peut avoir toutes formes possibles compte tenu du fait qu'il présente une face ouverte 25 permettant un démoulage aisé de la matrice.

Dans un mode préférentiel de l'invention, le couvercle et la platine dans son ensemble sont élaborés à partir de la même matière, mais pour certaines applications, il n'est toutefois pas envisageable d'élaborer une platine qui puisse supporter les efforts de réaction qui se développent à partir du moteur d'essuyage et il peut être envisagé que la platine 1 soit obtenue par moulage dans une matière à haute résistance aux efforts et la matière du couvercle soit constituée par une matière plastique de moindre qualité.

## Revendications

1. Platine d'essuie-glace constituée d'un ensemble monobloc muni d'une cavité (V2) formant bocal de lave-glace intégré à la platine et comprenant des moyens de fixation (3) sur la carrosserie, notamment d'un véhicule automobile, des moyens de montage (4,5) d'un moto-réducteur d'essuyage, au moins un palier (13) de sortie pour les arbres d'entraînement d'au moins un balai d'essuie-glace, lesdits arbres étant destinés à être reliés mécaniquement audit moto-réducteur, caractérisée en ce que la cavité (V2) présente une surface ouverte (25) ayant permis le démoulage de la platine hors de la matrice ayant servi à son moulage, cette surface ouverte (25) étant apte à être fermée par un couvercle (26) pour constituer ledit bocal de lave-glace.

2. Platine selon la revendication 1, caractérisée en ce que le couvercle (10) est soudé sur la platine (1).

3. Platine d'essuie-glace selon l'une des revendications 1 et 2, caractérisée en ce que le bocal de lave-glace (V2) s'étend sur la majeure partie de la platine (1).

4. Platine selon l'une des revendications 1 à 3, caractérisée en ce qu'une paroi (18) de la platine (1) porte la tubulure de remplissage (27) et un embout de liaison (28).

5. Platine selon l'une des revendications 1 à 4, caractérisée en ce que la platine et le couvercle sont moulés dans un même matériau.

6. Platine selon l'une des revendications 1 à 4, caractérisé en ce que la platine et le couvercle sont réalisés en des matériaux différents.

7. Platine selon la revendication 1, caractérisée en ce que la platine (1) présente un volume (V1) apte à recevoir en partie les arbres d'entraînement d'un balai d'essuie-glace et le dispositif de transmission d'effort.

8. Platine selon l'une des revendications précédentes, caractérisée en ce que la platine (1) présente des nervures de raidissement (30,31).

## Claims

1. A windscreen wiper support formed by a single-piece unit equipped with a cavity (V2) forming a windscreen washer reservoir integrated in the support and comprising attachment means (3) to the body, in particular of a motor vehicle, means for mounting (4,5) a geared motor for wiping purposes, at least one output bearing (13) for the driving shafts of at least one windscreen wiper blade, the said shafts being intended to be mechanically connected to said geared motor,
**characterized in that** the cavity (V2) has an open surface (25), which allowed the support to be turned out from the mould which was used for its moulding, this open surface (25) being suitable for being closed by a cover (26) in order to form the said windscreen washer reservoir.

2. A support according to Claim 1,
**characterized in that** the cover (10) is welded onto the support (1).

3. A windscreen wiper support according to one of Claims 1 and 2,
**characterized in that** the windscreen washer reservoir (V2) extends over the greater part of the support (1).

4. A support according to one of Claims 1 to 3,
**characterized in that** a wall (18) of the support (1) bears the filling connection piece (27) and a connecting mouthpiece (28).

5. A support according to one of Claims 1 to 4,
**characterized in that** the support and the cover are moulded in the same material.

6. A support according to one of Claims 1 to 4,
**characterized in that** the support and the cover are made from different materials.

7. A support according to Claim 1,
**characterized in that** the support (1) has a volume (V1) suitable for partially receiving the driving shafts of a windscreen wiper blade and the force transmission device.

8. A support according to one of the preceding Claims,
**characterized in that** the support (1) has reinforcing ribs (30, 31).

## Patentansprüche

1. Scheibenwischer-Gestellplatte, bestehend aus einer einstückigen Einheit mit einem Hohlraum (V2), der einen in die Gestellplatte integrierten Scheibenwascherbehälter bildet, sowie mit Mitteln (3) für die Befestigung an der Karosserie, insbesondere eines Kraftfahrzeugs, Montagemitteln (4, 5) für den Einbau einer Wischerantriebseinheit und mit mindestens einem Ausgangslager (13) für die Antriebswellen wenigstens eines Scheibenwischerblatts, wobei die genannten Antriebswellen für eine mechanische Verbindung mit der genannten Wischerantriebseinheit bestimmt sind , **dadurch gekennzeichnet,** daß der Hohlraum (V2) eine offene Fläche (25) aufweist, die das Entformen der Gestellplatte aus der für ihre Formung benutzten Form ermöglicht hat, wobei diese offene Fläche (25) durch einen Deckel (26) verschlossen werden kann, um den genannten Scheibenwascherbehälter zu bilden.

2. Scheibenwischer-Gestellplatte nach Anspruch 1, **dadurch gekennzeichnet,** daß der Deckel (10) auf der Gestellplatte (1) angeschweißt wird.

3. Scheibenwischer-Gestellplatte nach einem der Ansprüche 1 und 2, **dadurch gekennzeichnet,** daß sich der Scheibenwascherbehälter (V2) über den größten Teil der Gestellplatte (1) erstreckt.

4. Scheibenwischer-Gestellplatte nach einem der Ansprüche 1 bis 3, **dadurch gekennzeichnet,** daß eine Wand (18) der Gestellplatte (1) den Einfüllstutzen (27) und einen Verbindungsansatz (28) enthält.

5. Scheibenwischer-Gestellplatte nach einem der Ansprüche 1 bis 4, **dadurch gekennzeichnet,** daß die Gestellplatte und der Deckel aus dem gleichen Werkstoff geformt sind.

6. Scheibenwischer-Gestellplatte nach einem der Ansprüche 1 bis 4, **dadurch gekennzeichnet,** daß die Gestellplatte und der Deckel aus unterschiedlichen Werkstoffen ausgeführt sind.

7. Scheibenwischer-Gestellplatte nach Anspruch 1, **dadurch gekennzeichnet,** daß die Gestellplatte (1) einen Hohlraum (V1) aufweist, der teilweise die Antriebswellen eines Scheibenwischerblatts und die Kraftübertragungsvorrichtung aufnehmen kann.

8. Scheibenwischer-Gestellplatte nach einem der vorangehenden Ansprüche , **dadurch gekennzeichnet,** daß die Gestellplatte (1) Versteifungsrippen (30, 31) aufweist.
